# EUROPEAN PATENT APPLICATION

(11) **EP 2 592 540 A2**
(43) Date of publication of application: **15.05.2013**
(21) Application number: 12191578.9
(22) Date of filing: 07.11.2012
(51) Int. Cl.: G06F 3/0483, G06F 15/02

(54) **Method and apparatus for managing reading using a terminal**

(30) Priority: 08.11.2011 KR 20110115774
(71) Applicant: Samsung Electronics Co., Ltd, Gyeonggi-do 443-742 (KR)
(72) Inventor: Jang, Sihak, 443-742 Gyeonggi-do (KR); Kim, Yuran, 443-742 Gyeonggi-do (KR); Lee, Boran, 443-742 Gyeonggi-do (KR)
(74) Representative: Harrison Goddard Foote

(57) **Abstract**

A method of managing reading and an apparatus for efficiently managing reading of stored electronic books. The method includes: setting a reading period with respect to an electronic book and at least one reading amount to be achieved by a date occurring before the end of the reading period; monitoring an achievement proportion of the reading amount while the electronic book is being read; and displaying reading schedule information including the reading period and the achievement proportion.

## Description

### BACKGROUND OF THE INVENTION

### Field of the Invention

The present invention relates to a method and an apparatus for managing reading, and more particularly, to a method capable of managing a schedule associated with reading an electronic book using an electronic terminal, and an apparatus thereof.

### Description of the Related Art

In general, an electronic book means a digital book in which information such as texts or images are recorded in an electronic medium such that users may use the electronic book as an alternative to a paper book. A user can read an electronic book using an electronic device with an electronic book reader function. The price of an electronic book may be lower than that of a paper book. Further, a user may easily purchase and read a desired electronic book using an electronic terminal, which may be portable; for example, implemented as a portable electronic book reader or a tablet PC, anywhere and anytime. Accordingly, utilization of electronic books is increasing.

A terminal with an electronic book reader function may store a large number of electronic books. Accordingly, there is a need for efficient management with respect to stored electronic books and in particular progress reading one or more electronic books. However, conventional electronic devices, such as terminals in the prior art, provide only location information of a current reading page and location information separately bookmarked by the user, but do not provide a function capable of efficiently managing an electronic book. In addition, since terminals, such as portable electronic book readers and tablet PCs, are provided with increasingly large storage capacities capable of storing many electronic books, there is an essential need for a function that allows a user to conveniently and easily read and manage many electronic books.

### SUMMARY OF THE INVENTION

The present invention has been made in view of the above problems. Embodiments of the present invention provide a method of managing reading that may efficiently manage stored electronic books, and an apparatus thereof.

Embodiments of the present invention further provide a function that allows a user to read stored electronic books.

Embodiments of the present invention further provide a function that monitors and guides a user's reading.

In accordance with a first aspect of the present invention there is provided a method of managing reading using a terminal, the method comprising: setting a reading period with respect to an electronic book and at least one reading amount to be achieved by a date occurring before the end of the reading period; monitoring an achievement proportion of the reading amount while the electronic book is being read; and displaying reading schedule information including the reading period and the achievement proportion.

In accordance with a second aspect of the present invention there is provided an apparatus for managing reading using a terminal, the apparatus comprising: a memory arranged to store an electronic book; a controller arranged to set a reading period with respect to the electronic book and at least one reading amount to be achieved by a date occurring before the end of the reading period, and arranged to monitor an achievement proportion of the reading amount while the electronic book is being read; and a display unit arranged to display a page of the electronic book and reading schedule information including the reading period and the achievement proportion.

Another aspect of the invention provides a computer program comprising instructions arranged, when executed, to implement a method and/or apparatus in accordance with any one of the above-described aspects. A further aspect provides machine-readable storage storing such a program.

### BRIEF DESCRIPTION OF THE DRAWINGS

The objects, features and advantages of the present invention will be more apparent from the following detailed description in conjunction with the accompanying drawings, in which:
FIG. 1 is a block diagram illustrating a configuration of a portable terminal according to an exemplary embodiment of the present invention;
FIG. 2 is a diagram illustrating a configuration of an electronic book application unit according to the exemplary embodiment of the present invention;
FIG. 3 is a flowchart illustrating a method of managing reading according to the exemplary embodiment of the present invention;
FIG. 4 is a flowchart illustrating a method of managing reading according to another exemplary embodiment of the present invention;
FIG. 5 is a flowchart illustrating a method of managing reading according to still another exemplary embodiment of the present invention;
FIG. 6 and FIG. 7 are diagrams illustrating examples of a screen for setting a reading schedule;
FIG. 8 and FIG. 9 are diagrams illustrating examples of a screen for executing reading;
FIG. 10 is a diagram illustrating an example of a screen for recommending books; and
FIGS. 11A-11B are views illustrating a shape of a scroll bar for indicating current reading situation information.

### DETAILED DESCRIPTION OF EXEMPLARY EMBODIMENTS

Hereinafter, preferred embodiments of the present invention are described with reference to the accompanying drawings in detail. This invention may, however, be embodied in many different forms and should not be construed as limited to the exemplary embodiments set forth herein. The same reference numbers are used throughout the drawings to refer to the same or like parts. Detailed descriptions of well-known functions and structures incorporated herein may be omitted to avoid obscuring the subject matter of the present invention. Also, terms described herein, which are defined considering the functions of the present invention, may be implemented differently depending on the intention and practice of a user or an operator. Therefore, the terms should be understood on the basis of the disclosure throughout the specification. The principles and features of this invention may be employed in varied and numerous embodiments without departing from the scope of the invention.

Furthermore, although the drawings represent exemplary embodiments of the invention, the drawings are not necessarily to scale and certain features may be exaggerated or omitted in order to more clearly illustrate and explain the present invention.

Among the terms set forth herein, a terminal refers to any kind of device capable of processing data which is transmitted to or received from any external entity. The terminal may display icons or menus on a screen to which stored data and various executable functions are assigned or mapped. The terminal may include a computer, a notebook, a tablet PC, a mobile device, and the like.

Among the terms set forth herein, a screen refers to a display or other output device which visually displays information to the user, and which optionally is capable of receiving and electronically processing tactile inputs from a user using a stylus, a finger of the user, or other techniques for conveying a user selection from the user to the output devices.

Among the terms set forth herein, an icon refers to a graphical element such as a figure or a symbol displayed on the screen of the device such that a user can easily select a desired function or data. In particular, each icon has a mapping relation with a function which executable in the device or with data stored in the device and is used for processing functions or selecting data in the device. When a user selects one of the displayed icons, the device identifies a particular function or data associated with the selected icon. Then the device executes the identified function or displays or processes the identified data.

Among terms set forth herein, data refers to any kind of information processed by the device, including text and/or images received from any external entities, messages transmitted or received, and information created when a specific function is executed by the device.

An apparatus of the present invention for managing reading is applicable to electronic devices of various forms with an electronic book reader function. In addition, the apparatus of the present invention for managing reading is applicable to a portable terminal such as a smart phone or a tablet PC. Hereinafter, for the purposes of illustration and discussion of the exemplary embodiments of the present invention, it is assumed that the apparatus for managing reading is a portable terminal. However, it is to be understood that the present invention may be implemented in any known electronic device for reading.

Further, an apparatus for managing reading according to the present invention may provide a function capable of setting a reading plan of stored electronic books, a function of monitoring and guiding the user's reading, and a function of analysing a reading pattern of the user and recommending a book to the user based on the analysed result.

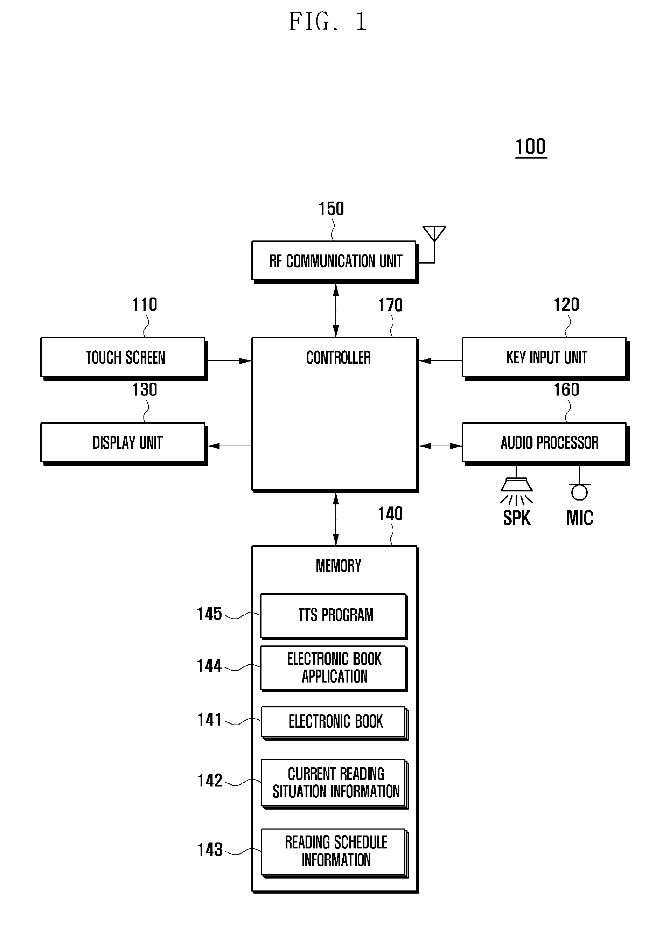

FIG. 1 is a block diagram illustrating a configuration of a portable terminal according to an exemplary embodiment of the present invention. Referring to FIG. 1, a portable terminal 100 according to the present invention includes a touch screen 110, a key input unit 120, a display unit 130, a memory 140, a radio frequency (RF) communication unit 150, an audio processor 160, a speaker SPK, a microphone MIC, and a controller 170. In the exemplary embodiment, the speaker SPK and the microphone MIC may be connected to the audio processor 160.

The touch screen 110 is mounted on a front surface of the display unit 130, and generates and transfers a touch event to the controller 170 in response to a user operation with respect to the touch screen 110. The controller 170 may control the foregoing elements in response to the touch event. Here, the user operation may be classified into touch, tap, double tap, press, drag, drag & drop, and sweep. Here, the touch is an operation that the user pushes one point of a screen; the tap is an operation that contacts one point on the touch screen 110 with a finger, stylus, or other object and then separates, for example, the finger from the one point without movement of the finger from above the one point after touching the one point; the double tap is an operation that successively taps one point on the touch screen 110 twice; the press is an operation that has the finger contact and press a point on the touch screen 110 without movement of the finger after touching the one point longer than the tap operation; the drag is an operation that moves the finger in a predetermined direction on the touch screen 110 after one point on the touch screen is touched; the drag & drop is an operation that removes a finger from contacting the touch screen 110 after a drag operation; and the swing or flip is an operation that removes the finger from contacting the touch screen 110 after moving the finger at high speed while maintaining the contact with the touch screen 110 in a drag operation. As used herein the drag operation may also be called a scroll, and the swing operation may also be called flick. The controller 170 may classify and distinguish the swing and the drag operations based on the moving speed of the finger, stylus, or other device. The touch screen 110 may be implemented by including a resistive type, a capacitive type, an electromagnetic induction type, and/or a pressure type component known in the art.

The key input unit 120 may include a plurality of input keys and function keys for receiving an input of numeral or character information and for setting various functions. The function keys may include arrow keys, side keys, and short keys set and configured such that a certain function is performed when each respective function key is pressed or otherwise actuated. Further, the input unit 120 generates and transfers a key signal associated with user setting operations and function control of the portable terminal 100. The key signals may be classified into, for example, at least a power on/off signal, a volume control signal, and a screen on/off signal. The controller 170 controls the foregoing elements in response to the key signals. The key input unit 120 may be realized by a QWERTY key pad, a 3*4 key pad, or 4*3 key pad with a plurality of keys. Further, when a touch screen 110 of the portable terminal 100 is implemented in the form of a full touch screen, the key input unit 120 may include only at least one side key for implementing a screen on/off operation to activate or deactivate the touch screen 110, and a power on/off operation for activating or deactivating the portable terminal 100, with the at least one side key provided in a side of a case of the portable terminal 100.

The display unit 130 converts image data from the controller 170 into, for example, an analog signal, and displays the analog signal. Alternatively, the image data may be converted into a digital signal for display by the display unit 130. That is, the display unit 130 may provide various screens according to utilization of the portable terminal 100, for example, a lock screen, a home screen, an application execution screen, a menu screen, a message creation screen, an Internet screen, and a key pad screen. In particular, the display unit 130 according to the present invention may provide an execution screen of an electronic book application under the control of the controller 170. The lock screen may be an image displayed when a screen of the display unit 130 is locked. If a certain touch event for lock release occurs, the controller 170 may switch a displayed image from the lock screen to a home screen or an application execution screen. The home screen may be an image including a plurality of application icons corresponding to a plurality of applications, respectively. If one icon is selected from a plurality of application icons by a user, the controller 170 may execute a corresponding application and switch the displayed image to an execution screen of the corresponding application. Further, the display unit 130 may divide a screen into a plurality of regions under the control of the controller 170 and display different screens in the divided regions. For example, the display unit 130 may divide the screen into a first region and a second region, display an application execution screen in the first region, and display a key pad screen in the second region.

Further, the display unit 130 may be configured in the form of a flat panel display implemented by, for example, a Liquid Crystal Display (LCD), an Organic Light Emitted Diode (OLED), an Active Matrix Organic Light Emitted Diode (AMOLED), or any other known displays. Further, the display unit 130 may include a 3D implementing component for displaying a left eye image and a right eye image, and controlling the images such that a user feels a depth feeling from viewing the displayed left/right eye images. As known in the related art, the 3D implementing component may be divided, for example, into a glasses type and an auto-stereoscopic type. The glasses type includes a colour filter type, a deflection filter type, and a shutter glass type, and the auto-stereoscopic type includes a lenticular lens type and a parallax barrier type.

The memory 140 may store an Operating System (OS), and applications and various data necessary for implementing and performing the present invention. The memory 140 may at least include a program area and a data area. The data area of the memory 140 may store data generated by the controller 170 according to the use of the portable terminal. Further, the data area may store the aforesaid screens for subsequent output from the display unit 130. Among the screens, the key pad screen and the menu screen may have various forms. That is, the key pad screen may be configured such as a 3*4 or a QWERTY key layout. Moreover, the menu screen may include a screen switch key (e.g., a return key for returning a screen to a previous screen), and a control key for controlling a currently executed application. Further, the keypad screen or the menu screen may be displayed to overlap a lock screen, an application execution screen, and a home screen. Further, the data area may temporarily store data by the user from messages, photographs, web pages, and documents for insertion of data. Further, the data area may store various setting values (e.g., screen brightness, presence of a vibration upon generation of a touch, presence of automatic screen rotation) for operating the portable terminal 100.

In particular, the data area of the memory 140 according to the invention may store a plurality of electronic books 141. The data area may store current reading situation information 142 with respect to a plurality of stored electronic books 141. Here, the current reading situation information 142 may contain read pages, read dates, non-read pages, and user input information. Here, the user input information is defined as information input by the user to a separate page. The user input information may be displayed simultaneously when a corresponding page is displayed. For example, the user input information may be data representing a memo, highlighted text, images, and bookmarks. Further, the data area may store reading schedule information 143 with respect to a plurality of electronic books 141. The reading schedule information 143 may contain start and end dates of reading, alarm information, a reading amount (reading range) and an achievement proportion to be achieved by a date occurring before an end of the reading period for a user of the terminal 100. The achievement proportion may alternatively be referred to as an achievement ratio or an achievement rate. Here, the achievement proportion means a ratio of an actually read page amount to a planned reading amount for reading, or the total amount of pages. For example, if the planned reading amount of today; that is, the current date, is 100 pages and the user reads 80 pages, the achievement proportion for today is 80 %. It will be appreciated that in alternative embodiments of the present invention the reading amount may be calculated as the proportion of the volume or the content of the book, for instance the read proportion of the total word count, which may differ from the proportion of read pages. The achievement proportion may include an achievement proportion by predetermined dates. Here, the average achievement proportion means a ratio of a total amount of read pages to a total amount of an electronic book. Further, the data area may store a look-up table to determine a presence of reading of the page. The following Table 1 indicates an example of the look-up table.

**TABLE 1**

| Classification | A | B | C | D | E | F | G | H |
|---|---|---|---|---|---|---|---|---|
| Recognize Reading | O | O | O | X | X | X | X | X |

in which the classifications are (A) skipped pages using a flick operation, (B) skipped pages using a tap operation, (C) skipped pages using text-to-speech (TTS), (D) skipped pages using a scroll bar, (E) skipped pages using multi-touch operations on the touch screen 110, (F) move to a list screen, (G) move to my notebook, and (H) move to a plan screen.

As illustrated in the look-up table, when a page is skipped from a currently displayed page to a previous or next page (that is, the page is skipped), the controller 170 recognizes that the current page is read, but does not recognize that any other page which is skipped is read. Specifically, if a page skip occurs jumping from the current page to another page other than the immediately preceding or following page, such that at least one page is skipped over then the or each page that is skipped over is not considered to have been read. Referring to Table 1, for example, if a flick is sensed, the controller 170 recognizes that a current page is read, and controls the display unit 130 to display a next or previous page. Further, the controller 170 updates reading schedule information 142 associated with reading recognition with respect to a current page. Further, if a tap is sensed at either end of a page, namely, a left end or a right end of the current page, the controller 170 recognizes that the current page is read. Meanwhile, the portable terminal 100 according to the present invention may include a Text To Speech (TTS) function for converting a text into an audio signal, such as a computer-generated voice, and outputting the voice. That is, the controller 170 may control the terminal 100 such that a current page is converted into a voice, and the voice is output using the TTS function. In this case, when a voice, which is output with respect to the current page, is terminated, the controller 170 may control the terminal 100 such that a next page is displayed. Moreover, the controller 170 may recognize that the current page is read.

However, although a page skip is achieved for each page of a set of pages, the controller 170 may not recognize that a current page has been read if a page skip occurs using a scroll bar. Here, the scroll bar is displayed to overlap the current page, and may indicate entire pages. The user may operate a scroll bar to skip a page and to jump to a certain page. Further, the scroll bar may include location information, read parts, non-read parts, and a location of a final page of a planned amount for reading for a specific day, such as today. In the meantime, if a multi-touch operation is sensed, the controller 170 may perform a page skip from a current page to a specific different page. Here, the multi-touch operation means an operation in which a user touches a plurality of points on the touch screen 110. For example, if an operation (namely, a multi-touch operation) involves moving two fingers at high speed for flipping while the user simultaneously touches two points, the controller 170 may control the terminal 100 such that a first page of a next chapter is displayed in a current page. Further, if a flick is simultaneously detected at three points on the touch screen 110, the controller 170 may move a current page to the nearest book-marked page. As illustrated above, the controller 170 may not recognize that a current page is read when a page skip occurs, which jumps to a certain page using multi-touch. In addition, the controller 170 may not recognize that a current page is read in response to movement of the current page to a list screen, a new notebook screen, or a reading plan screen. Here, the new notebook screen may be a screen displaying information which the user inputs with respect to an electronic book. If generation of a touch event with respect to user input information is sensed on the new notebook screen, for example, when a tap with respect to a memo is sensed, the controller 170 may control the terminal 100 such that a corresponding page of a memo, on which a tap is performed, is displayed.

The look-up table as illustrated above is merely an example for determining a page is considered to have been read, but such an example, does not restrict the present invention. That is, reading recognition conditions may involve various conditions, for example, user input information, or a determination of a time as well as a page skip. Specifically, when the user inputs user input information in a current page and then moves to a list or a certain page other than moving one page unit, the controller 170 may recognize that the current page is read. That is, if the user input information is input in the current page, the controller 170 may recognize that the current page fulfils a reading recognition condition, even if a page skip occurs afterward which would normally cause the current page to be considered to have not been read. Further, a reading recognition time may be set. That is, if a current page is displayed for longer than a reading recognition time, such as one minute or longer, the controller 170 may recognize that the current page fulfils a reading recognition condition.

The program area of the memory 140 may store an operating system (OS) for booting the portable terminal 100 and for operating the foregoing elements, and applications for supporting various user functions, for example, a web browser accessing an Internet server, an MP3 user function for playing other sound sources, an image output function for displaying photographs, and a moving image playback function. In addition, the program area may store an electronic book application 144 and a TTS program 145. Here, the electronic book application 141 may include a routine for managing a reading schedule, a current reading situation, a reading recommendation, and a routine executing reading. Further, the electronic book application 144 may further include a routine associated with the TTS program 145 for performing TTS on an electronic book. Further, the electronic book application 144 may include a routine to perform the TTS function by itself, for example, to perform TTS on notes or other text available in the terminal 100 but which are not part of an electronic book. The electronic book application 144 may further include a routine associated with an alarm application. The alarm application is application for outputting an audio and/or visual alarm such as an audio and/or visual message through an output device, such as the speaker SPK and/or the display unit 130, and/or vibrating the terminal 100 using a vibrating unit included in the terminal 100, such as included in or connected to the controller 170, at a time determined by the user, for example, at a reading time. When the portable terminal 100 is initially powered up and booted, the alarm application may be automatically executed. That is, the electronic book application 144 may be automatically executed at a predetermined reading time.

The RF communication unit 150 performs a call function to process a speech call, a moving call, and/or performs a data communication with other entities or devices under the control of the controller 170. To do this, the RF communication unit 150 may include an RF transmitter for up-converting a frequency of a signal for transmission and amplifying the signal, and an RF receiver for low-noise-amplifying a received signal and down-converting a frequency of the signal. Further, the RF communication unit 150 may include a mobile communication module (e.g., a 3-Generation mobile communication module, a 3.5-Generation mobile communication module, a 4-Generation mobile communication module, or the like), a near distance communication or near field communication (NFC) module (e.g., a Wi-Fi module), or a digital broadcasting module (e.g., DMB module). In particular, the RF communication unit 150 performs wireless communication with an on-line book store under the control of the controller 170.

The audio processor 160 performs a function that transmits an audio signal provided from the controller 170 to the speaker SPK and transfers an audio signal such as a voice provided from the microphone MIC to the controller 170. That is, the audio processor 160 converts voice/sound data into an audible sound through the speaker SPK and outputs the audible sound under the control of the controller 170. The audio processor 160 converts an audio signal such as a voice received from the microphone MIC into a digital signal, and transfers the digital signal to the controller 170.

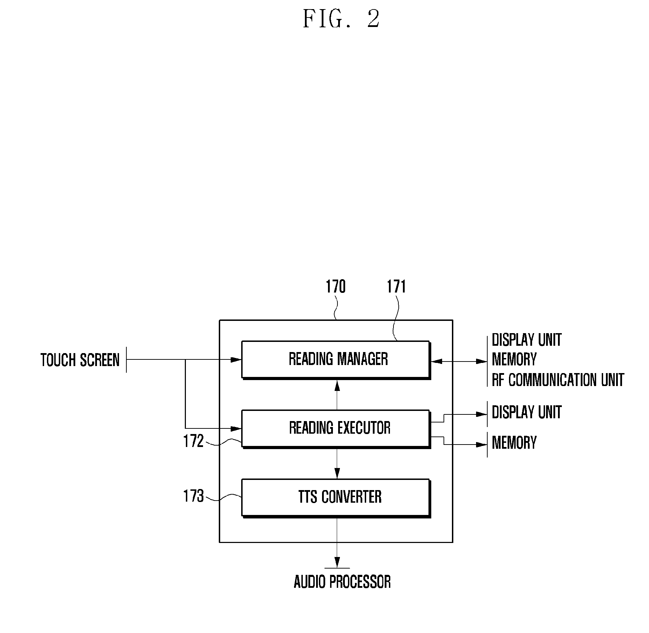

The controller 170 controls an overall operation of the portable terminal 100, controls signal flow between internal elements of the portable terminal 100, and performs a function for processing data. Further, the controller 170 may control a power supply from a battery or other power sources to internal elements of the terminal 100. Moreover, the controller 170 may execute various applications stored in the program area. In particular, the controller 170 according to the present invention may include an electronic book application unit as illustrated in FIG. 2.

FIG. 2 is a diagram illustrating a configuration of an electronic book application unit according to the exemplary embodiment of the present invention. The electronic book application unit may be configured inside the controller 170 or may be configured separately.

Hereinafter, it is assumed that the electronic book application unit may be configured inside the controller 170. Referring to FIG. 2, the electronic book application unit according to the exemplary embodiment of the present invention may include a reading manager 171, a reading executor 172, and a TTS converter 173.

The reading manager 171 performs a function for generally managing a reading schedule that allows the user to perform planned reading. The following is a detailed description of the management function.

The reading manager 171 sets a reading schedule. If a touch event is associated with a request for setting a reading schedule from the touch screen 110, the reading manager 171 controls the display unit 130 to display a reading schedule setting screen. Here, the reading schedule setting screen includes a reading start date setting menu, a reading end date setting menu, an alarm setting menu, a reading amount setting menu organized by dates, and the like. If the touch event is associated with termination of setting the reading schedule, the reading manager 171 stores reading schedule information in the memory 140, which is set through the reading schedule setting screen.

The reading manager 171 monitors and guides a current reading situation to the user. Specifically, the reading manager 171 collects current reading situation information including page information read from the reading executor 172, and stores the collected current reading information in the memory 140. Further, the reading manager 171 calculates an achievement rate by date and an average achievement rate based on the collected current reading situation information, namely, an amount of a read page. Moreover, if a touch event associated with a request for the collected current reading situation information is sensed, the reading manager 171 controls the terminal 100 such that the current reading situation information is output to the user through the display unit 130.

The reading manager 171 analyses a reading pattern of the user based on the current reading information. Specifically, the reading manger 171 classifies stored electronic books by categories such as literature, newspapers, magazines, cartoons, and professional books. Further, the reading manager 117 may sub-divide the electronic books. For example, in the case of the literature category, the reading manager 171 may sub-divide the electronic books by genres such as novels, collections, and poems. The reading manager 171 calculates a reading rate of the user by categories or genres based on the stored reading information and the current reading situation information. Moreover, the reading manager 171 stores the calculated reading rate information in the memory 140.

The reading manager 171 also provides recommended book information to the user based on the analysed reading pattern. Specifically, the reading manager 171 controls the RF communication unit 150 to transmit genre or category information of a book having the highest reading rate to an on-line book store. That is, the reading manager 171 requests the recommended book information from the on-line book store. If the requested recommended book information is received from the on-line book store, the reading manager 171 stores the recommended book information in the memory 140. In the meantime, if the touch event associated with a request of a recommended book is sensed, the reading manager 171 may control the terminal 100 such that the recommended book information is displayed. In addition, the reading manager 171 may control the terminal 100 such that reading rate information is displayed together with the recommended book information.

The reading executor 172 performs a function for executing reading of an electronic book. Specifically, the reading executor 172 reads out a page of an electronic book from the memory 140 and controls the terminal 100 such that the read page is displayed. If a touch event associated with a page skip is sensed, the reading executor 172 executes the page skip. In this case, the reading executor 172 determines whether the executed page skip is a page skip corresponding to reading recognition with reference to the look-up table as illustrated in Table 1. When the executed page skip is a page skip corresponding to reading recognition, the reading executor 172 transfers corresponding page information to the reading manager 171. Here, reading recognition conditions may be the presence of a page skip, whether the user separately inputs the current page as illustrated above, and whether a current page is displayed for a pre-set reading recognition time or greater.

Further, the reading executor 172 controls the TTS converter 173. That is, the reading executor 172 may control the terminal 100 such that text information of an electronic book is output as computer-generated audio simulating a voice. Specifically, if a touch event is associated with a request for TTS, the reading executor 172 transfers texts of the read electronic book to the TTS converter 173. Accordingly, the TTS converter 172 converts provided texts into sound data and outputs the sound data to the audio processor 160 for output as audio in the form of a voice output to simulate a voice. In this case, if the voice output for one page is terminated, the reading executor 172 executes a page skip. Moreover, the reading executor 172 recognizes that a page, in which the voice output has been terminated, is read by the user, and transfers the information to the reading manager 172.

The portable terminal 100 described herein may further include various additional modules known in the art. That is, when the portable terminal 100 is a communication terminal, the terminal 100 may include components that are not mentioned herein but which may be included or implemented, such as a near distance or near field communication (NFC) module for near distance or near field communication, an interface for exchanging data in a wired communication configuration or in a wireless communication configuration of the portable terminal 100, an Internet communication module communicating with the Internet to perform an Internet-based function such as searching or browsing as well as E-mail applications, and a digital broadcasting module for receiving and broadcasting digital broadcasting information, such as multimedia output to the user of the terminal 100. Since the structural elements and components of the terminal 100 can be variously changed according to convergence trends of digital devices and manufacturers' design, the examples mentioned herein are not exhaustive, and it is to be understood that any known components may be included in the terminal 100. However, the portable terminal 100 may include structural elements equivalent to the exemplary structural elements described here. Further, the terminal 100 of the present invention may be substituted by specific constructions and components in the described arrangements of elements according to the description herein. This can be easily understood to those skilled in the art.

Hereinafter, a method of managing reading according to the exemplary embodiments of the present invention is described based on the various elements of the portable terminal 100 described herein in connection with FIGS. 1-2.

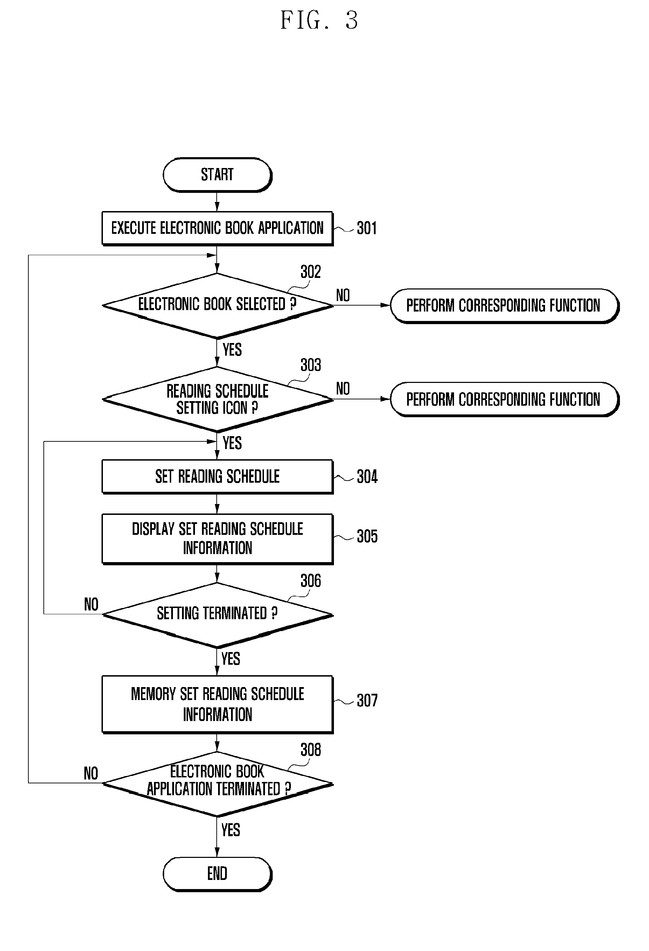

FIG. 3 is a flowchart illustrating a method of managing reading according to the exemplary embodiment of the present invention. Referring to FIG. 1 and FIG. 3, if a touch event associated with an execution request of an electronic book application 144 is sensed in an idle state, the controller 170 may execute the electronic book application 144 and control the terminal 100 such that a bookshelf screen including a plurality of electronic book icons corresponding to a plurality of electronic books are displayed, respectively, in step 301. Here, the respective electronic book icons may include a current situation display mark or icon schematically indicating current reading situation information. For example, the current situation display mark or icon may be a bar type graphical element indicating an amount of reading from a total page. Meanwhile, if a touch event selecting an electronic book icon of a plurality of electronic books is sensed while displaying the book shelf screen in step 302, the controller 170, namely, the reading executor 172, controls the terminal 100 such that the selected page of the electronic book is read out from the memory 140 and is displayed. Here, the displayed page may be a list, a first page, or a previously displayed page of the corresponding electronic book. However, if in step 302, a touch event for selecting the electronic book icon is not sensed, the method performs a function corresponding to other touch events or inputs. Further, the reading executor 172 may control the terminal 100 such that a reading schedule setting icon and current reading situation information 143 are displayed together with a page. The reading schedule setting icon may be displayed at edges of a screen.

Further, the current reading situation information 143 may be a scroll bar for indicating a read part from a total page. If a tap with respect to a centre part of a screen is detected while displaying only the page, the reading executor 172 may control the terminal 100 such that the reading schedule setting icon and the current reading situation information 143 are displayed overlapping the page. However, if a touch event is detected or sensed for selecting any graphical element on the screen other than the electronic book icon of a plurality of electronic books, for example, if a function, which is associated with outputting recommended book information, is selected, the controller 170, namely, the reading executor 171 may provide recommended book information.

If the reading schedule setting icon is selected while a selected page is being displayed in step 303, the reading manager 171 controls the terminal 100 such that a corresponding screen is displayed. However, when a touch event corresponding to a different function, other than the reading schedule setting icon, is sensed in step 303, the method performs the different function corresponding to other touch events or inputs. For example, if a page skip is sensed in step 303, the reading executor 172 executes the page skip.

While the reading schedule setting screen is being displayed, the reading manager 171 sets a reading schedule in step 304. That is, the reading manager 171 sets a start date and an end date of reading, sets a reading alarm time and / or date, and sets one or more reading amount to be achieved by a certain time or date according to a sensed touch event. Next, the reading manager 171 controls the terminal 100 such that set reading schedule information is displayed in step 305. Next, the reading manager 171 determines whether setting a reading schedule is terminated in step 306. When setting reading schedule is not terminated yet as the determination result, the process returns to step 304 and the reading manager 171 sets a reading schedule. However, if termination of setting the reading schedule (e.g., a tap is detected with respect to a storage button icon) is sensed, the reading manager 171 stores the set reading schedule information in the memory 140 in step 307. Next, the controller 170 determines whether the electronic book application 144 is terminated in step 308. When the electronic book application 144 is not terminated, the process returns to step 302; otherwise, the method ends.

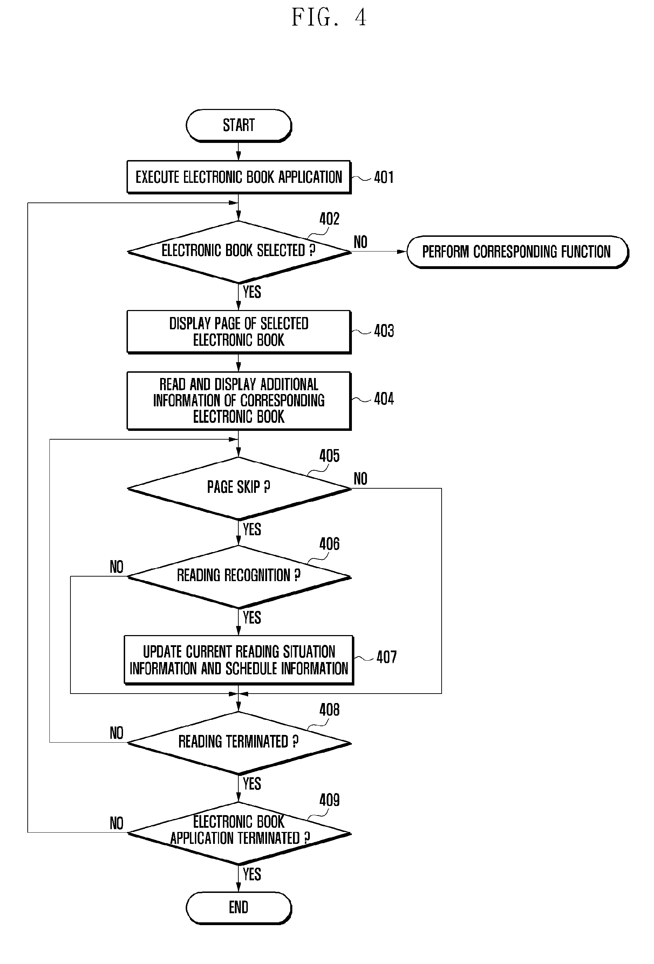

FIG. 4 is a flowchart illustrating a method of managing reading according to another exemplary embodiment of the present invention. Referring to FIG. 1 and FIG. 4, a controller 170 executes an electronic book application 144 to display a bookshelf screen in step 401. In this case, a plurality of electronic book icons corresponding to a plurality of electronic books are included in the bookshelf screen. Icons of electronic books, for which a reading schedule is set, may be displayed to be distinguished from those electronic books to which the reading schedule is not set. For example, icons of electronic books for which a reading schedule is set may further include a schedule setting mark or icon indicating that a reading schedule is set together with the current situation display mark or icon. For example, the mark may be a graphical element on the screen in the form of a star shape. In the meantime, the current situation display mark with respect to only an icon of an electronic book, for which the reading schedule is set, may be displayed. In this case, the current situation display mark is substituted for the schedule setting mark. That is, the schedule setting mark is displayed.

If the electronic book is selected in step 402 while the bookshelf screen is being displayed, the reading executor 172 controls the terminal 100 such that a page of the selected electronic book is displayed in step 403. However, if in step 402, a touch event for selecting the electronic book icon is not sensed, the method performs a function corresponding to other touch events or inputs. Referring back to step 403, if a touch event associated with a request of additional information is sensed, the reading executor 172 reads additional information of a corresponding electronic book from the memory 140 and controls the terminal 100 such that the additional information is displayed in step 404. The additional information may contain current reading situation information 142. Moreover, if a reading schedule of a corresponding electronic book is set, the additional information may further contain reading schedule information 143.

Next, if a touch event associated with a page skip is detected in step 405, the reading executor 172 executes the page skip. Otherwise, if no touch event for a page skip is detected in step 405, the method proceeds to step 408. As illustrated previously, the page skip means an action that moves to a previous page, a next page, a list, a bookmark, etc., and may include a notebook screen, a reading plan screen or a first page of a next chapter. In the meantime, in a case where the TTS function is executed, if speech output with respect to a current page is terminated, the reading executor 172 may execute a page skip from a current page to a next page. Further, referring to step 405, once step 405 is performed, the reading executor 172 determines whether the page skip corresponds to "reading recognition" in step 406. Depending on the determination result, if no page skip corresponding to reading recognition is determined, the method proceeds to step 408; however, when the page skip is a page skip moving from the previous page to the next page, the reading executor 172 sets reading situation information with respect to the current page. Then, the reading manager 171 collects corresponding information from the reading executor 172, and updates current reading situation information and schedule information in step 407. In meantime, although the page skip is a page skip moving a previous or next page, when the page skip moves within a pre-set threshold time, the reading executor 172 may not recognize that the current page is read. That is, this case is a case where the user does not read a current page and simply skims the page, so skimming a page typically takes less time than reading a page.

The threshold time may be set differently according to the type or field of a book. For example, a threshold time of a cartoon may be set shorter than that of a novel. For example, the threshold time of a cartoon may be 5 seconds and the threshold time of a novel may be 10 seconds.

Next, the reading executor 172 determines whether reading is terminated in step 408. Depending on the determination result, when the reading is not terminated, the reading executor 172 returns to step 405. However, if a touch event requesting termination with respect to reading corresponding electronic book is sensed, the method proceeds to step 409. The controller 170 determines whether the electronic book application 144 is terminated in step 409. Depending on the determination result, when the electronic book application 144 is not terminated, the process returns to step 402 to repeat and continue the method; otherwise, the method ends.

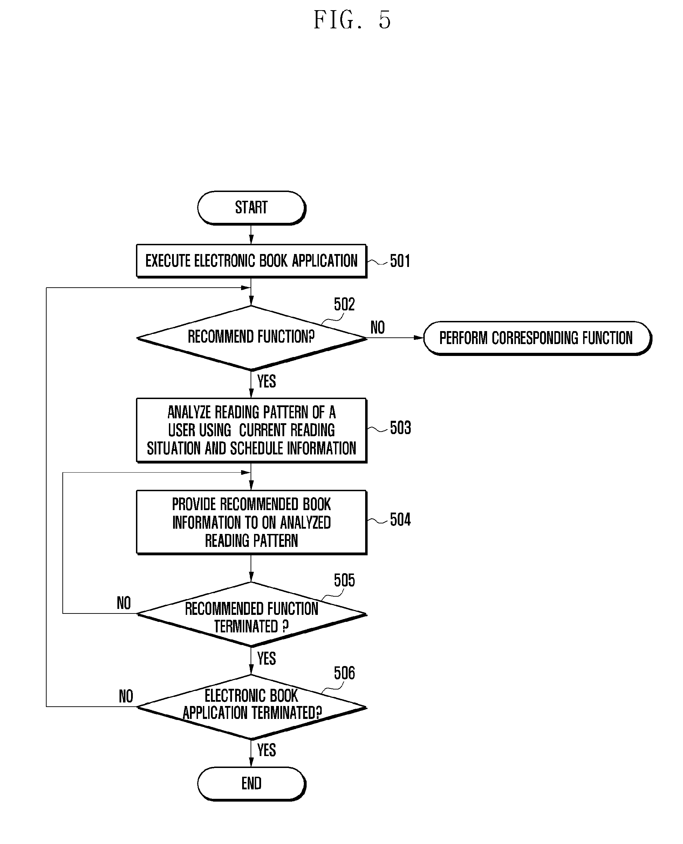

FIG. 5 is a flowchart illustrating a method of managing reading according to still another exemplary embodiment of the present invention. Referring to FIG. 1 and FIG. 5, a controller 170 executes an electronic book application 144 to display a bookshelf screen in step 501. In this case, the bookshelf screen may include a book recommend icon. If a recommended function is selected while a bookshelf screen is being displayed in step 502, that is, when a tap, with respect to the book recommended icon, is sensed, the method proceeds to step 503. However, if no recommend function is selected in step 502, the method performs a function corresponding to other touch events or inputs. Referring back to step 503, a reading manager 171 analyses a reading pattern of a user in step 503. For example, the reading manager 171 may determine one or more favourite field or category of book of the user, or one or more field for which a user performs a schedule to the highest degree, such as reading for long periods of time, using a current reading situation information 142 and schedule information 143. Specifically, the reading manager 172 may calculate a reading rate of a user by categories, or specifically by genres based on the current reading situation information 142. In this case, the reading rate may be calculated, for example, specifically for each week or month. That is, the reading manager 172 may set a period and calculate a reading rate of a user with respect to the set period. Further, when calculating the reading rate, the reading manager 172 may apply an achievement rate as a weight value. For example, although a novel and a newspaper may have the same reading rate, if an achievement rate of the novel is higher than that of the newspaper, a greater weight is applied to the novel.

Next, the reading manger 171 provides recommended book information to the user in step 504, based on the analysed reading pattern determined in step 503. That is, the reading manager 171 controls the RF communication unit 150 to request recommended book information from an on-line book store, and controls the terminal 100 such that recommended book information is received from the on-line book store. Next, the reading manager 171 determines whether a recommended function is terminated in step 505. Depending on the determination result, when the recommended function is not terminated, the reading manager 171 returns to step 504. However, if a touch event requesting termination of the recommended function is sensed in step 505, the method proceeds to step 506. The controller 170 then determines whether the electronic book application 144 is terminated in step 506. Depending on the determination result, when the electronic book application 144 is not terminated in step 506, the method proceeds to step 502; otherwise, the method ends.

Hereinafter, a method of managing reading and an apparatus thereof according to the invention will be described with reference to example diagrams of a plurality of screens.

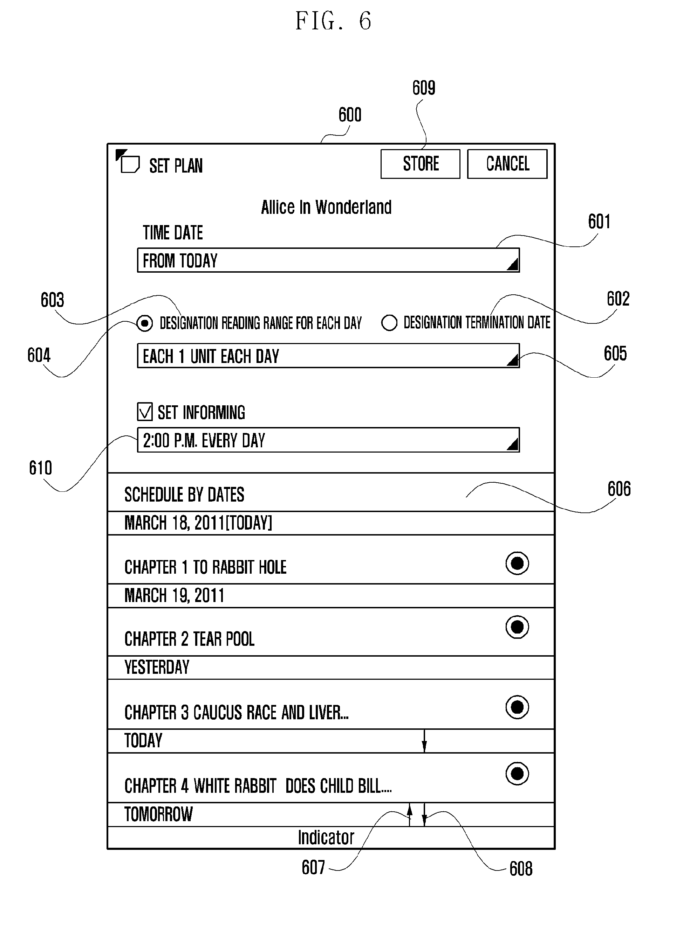

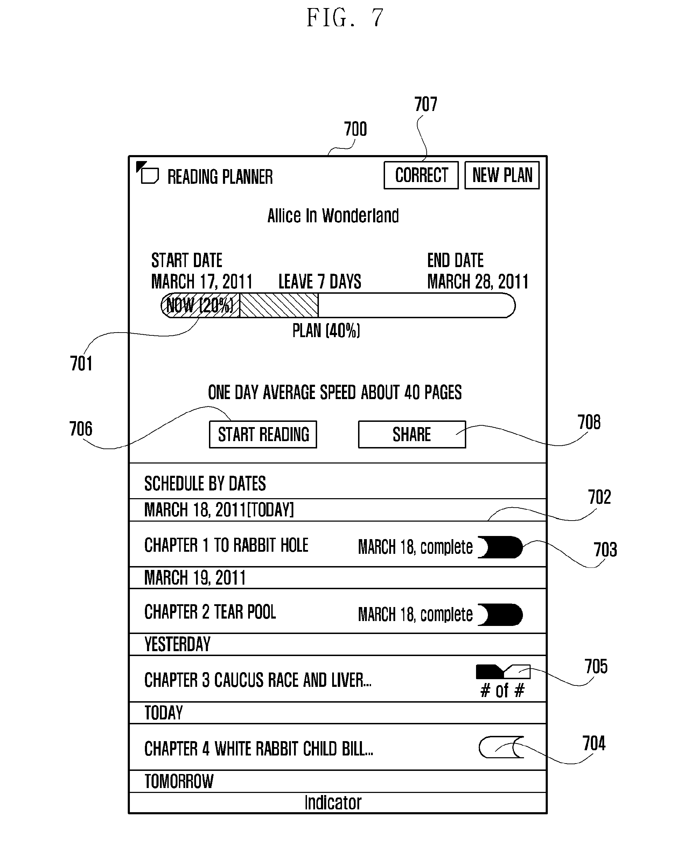

FIG. 6 and FIG. 7 are diagrams illustrating examples of a screen for setting a reading schedule. First, referring to FIG. 1 and FIG. 6, the display unit 130 may display a reading schedule setting screen 600 under the control of the controller 170. The reading schedule setting screen 600 may include a reading start date setting menu 601, a reading termination date setting menu 602, a one-day reading amount setting menu 603, and an alarm setting menu 610. As described herein, the term "menu" may include a displayed list and/or a pull-down menu for listing one or more user-selectable options, in a manner known in the art. It will be appreciated that in alternative embodiments of the present invention alternative user interface controllers for allowing a user to select or otherwise enter a desired value or parameter may be provided. Each of the menus 601, 602, 603, 610 in FIG. 6 show one option, but a user selecting each of the menus 601, 602, 603, 610, for example, by tapping or otherwise selecting the menu, will cause the controller 170 to display additional available options and user selections, in a manner known in the art. Here, if the user sets a reading start date and a reading termination date using the reading start date setting menu 601 and the reading termination date setting menu 602, the controller 170 may control the terminal 100 such that a one-day reading amount is calculated and displayed based on the set start date and termination date. If the user designates a reading start day using the reading start date setting menu 601 and designates a one-day reading amount using the one-day reading amount setting menu 603, the controller 170 may calculate a termination date based on the designated reading start day and the one-day reading amount, and control the terminal 100 such that the calculated termination date is displayed. Here, the one-day reading amount may be uniformly or non-uniformly distributed by dates. For example, if a tap with the one-day reading amount setting menu 603 is sensed, the controller 170 checks a reading amount setting check box 604. When a tap with respect to the menu bar 605 is sensed in a checked state of the reading amount setting check box 604, the controller 170 controls the terminal 100 such that a pop-up window and/or a pull-down menu for setting a one-day reading amount is displayed to overlap the reading schedule setting screen 600. For example, the pop-up window may include a plurality of items such as five pages per day, one chapter per day, two chapters per day, one chapter per week, two chapters per weekend, or any designated selection input by the user. Here, the user designation is an item that allows the user to directly input a selected and customized reading amount when there is no desired item favoured or preferred by the user among the available menu items. If a one day option is selected from the items by the user, the controller 170 sets the selected item as a one-day reading amount. In the meantime, the user may set an alarm time using an alarm setting menu 610. That is, the controller 170 sets an alarm time, and generates an alarm at the set alarm time during a reading time.

Further, the display unit 130 may display reading schedule information 606 under the control of the controller 170. That is, the reading schedule setting screen 600 may further include reading schedule information 606 set by the menus. For example, the display unit 130 may display a title of a chapter planned for reading by a particular date. In this case, since the display region may have a maximum display size, schedule information for all dates may not be displayed in some embodiments of the present invention. Alternatively, larger displays or scrollable windows may be provided to display and select schedule information of all dates. Accordingly, the user operates the touch screen 110 to display schedule information set for another date. That is, an upward or downward drag operation is sensed in a region of the touch screen 110 on which the reading schedule information is displayed, and the controller 170 controls the terminal 100 such that another date is set, and schedule information is set in the other date.

In the meantime, the user may correct a set reading schedule using the reading schedule information 606. That is, the controller 170 may control the terminal 100 such that menus 607 and 608 for correcting schedule information are displayed alongside displayed dates. Here, as illustrated, the correction menus 607 and 608 may be displayed with an arrow mark or icon indicating a correction direction. If a tap with respect to a first correction menu 607 in an upward direction is sensed, the controller 170 may merge a chapter or a page planned for reading with a previous day at a corresponding day. Further, the controller 170 may advance a schedule from a termination day of reading to the corresponding day for each day. If a tap with respect to a second correction menu 608 in a downward direction is sensed, the controller 170 may merge a chapter or a page planned for reading with a next day at a corresponding day. Further, the controller 170 may delay a schedule from a start day of reading to a later day for each originally scheduled day. In the meantime, in an exemplary embodiment, the controller 120 may not adjust the schedule, but instead may make the corresponding day empty as a day without a reading plan. If a tap with respect to the storage button 609 is sensed, the controller 170 may control the terminal 100 such that a reading plan screen as illustrated in FIG. 7 is displayed.

Next, referring to FIG. 1 and FIG. 7, the display unit 130 may display a reading plan screen 700 under the control of the controller 170. The reading plan screen 700 provides current reading situation information and reading schedule information. Specifically, the reading plan screen 700 may include achievement information 701 and reading schedule information 702. Here, the achievement information 701 may contain, for example, ratio information of today's read amount to a total page, ratio information of today's reading planned amount to the total page, reading start date information, and reading completion date information. The reading schedule information 702 may contain planned page information by dates for reading (e.g., chapter title, start page and end page in planned page for reading in a corresponding day). Further, the reading schedule information 702 may further contain current reading situation information by dates. Here, the current reading situation information may contain information indicating whether a schedule is achieved, the number of read pages, and the number of not read pages. That is, an indicator 703 is used to express that entire pages are planned for reading. An indicator 704 is shown for expressing that not all pages have been read; for example, the indicator may have a white appearance representing an empty or incomplete state of reading the corresponding chapter or scheduled reading amount, while the indicator 703 may have a black or solid colour appearance representing a full or completed state of reading the corresponding chapter or scheduled reading amount. Further, an indicator 705 is also displayed for expressing that the pages are partially read, and may express an amount of entire pages planned for reading and an amount of read pages together with the indicator as shown.

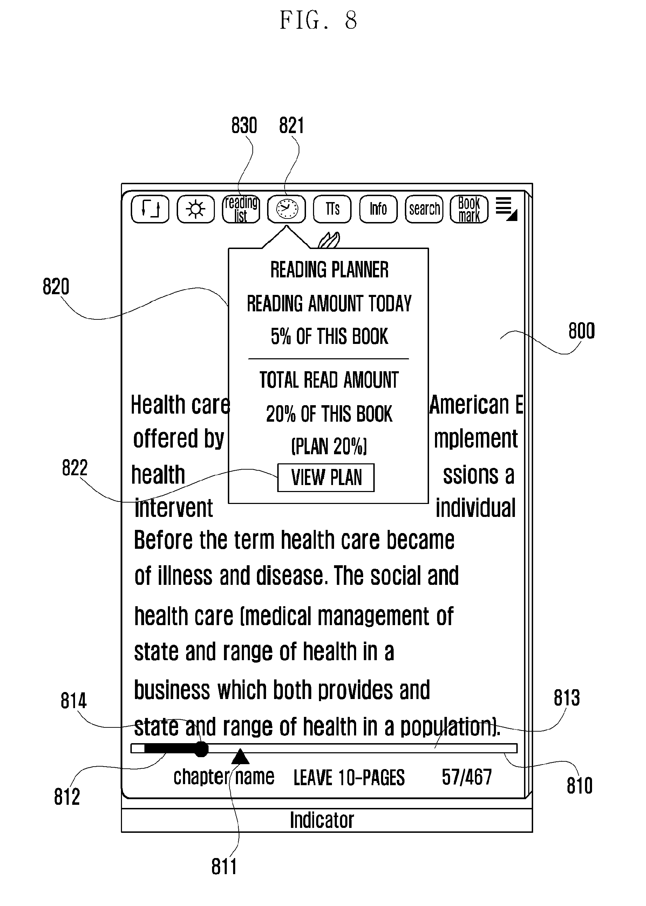

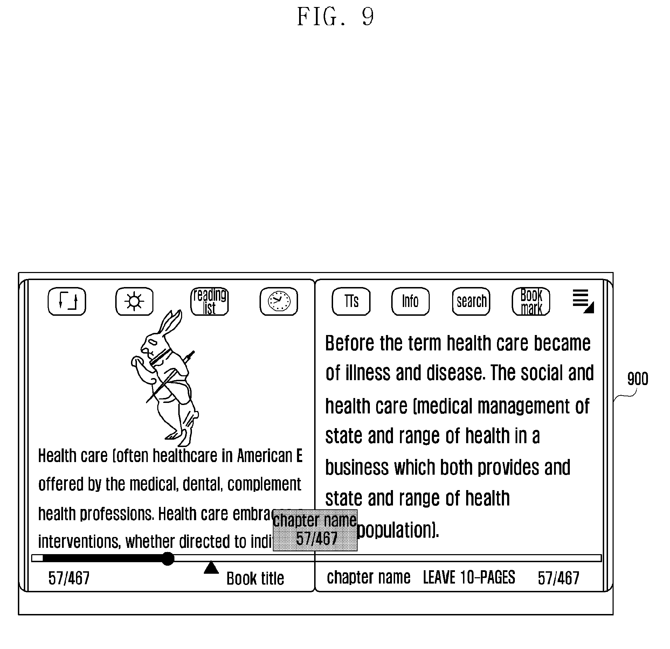

In the meantime, the reading plan screen 700 may include an icon 706 for executing reading, an icon 707 for correcting a reading schedule, and an icon 708 for sharing reading schedule information. Here, if a tap with respect to the reading execution icon 706 is sensed, the controller 170 may control the terminal 100 such that a reading execution screen as illustrated in FIG. 8 and FIG. 9 is displayed. If a tap with respect to the schedule correction icon 707 is sensed, the controller 170 may control the terminal 100 such that a reading schedule setting screen 606 as illustrated in FIG. 6 is displayed. If a tap with respect to the share icon 708 is sensed, the controller 170 may control the RF communication unit 150 such that reading schedule information is shared. For example, the portable terminal 100 of the present invention may share reading schedule information of the user in a social network service (SNS) system such as the commercially available networks "FACEBOOK" owned by "FACEBOOK, INC.", and "TWITTER" owned by "TWITTER, INC.".

FIG. 8 and FIG. 9 are diagrams illustrating examples of a screen for executing reading. Here, FIG. 8 illustrates an example reading execution screen 800 which is displayed in a state in which the portable terminal 100 is vertically oriented to provide a portrait-style layout of the screen 800 for reading pages of an electronic book, in a manner similar to paper-based books. FIG. 9 illustrate an example reading execution screen 900 which is displayed in a state in which the portable terminal 100 is horizontally oriented to provide a landscape-style layout of the screen 900 for reading pages of an electronic book. It is understood that such portable terminals 100 may have one lengthwise dimension longer than the other, and typically the longer lengthwise dimension is oriented in a vertical direction. However, it is also understood that other portable terminals 100 may have a longer lengthwise dimension in a horizontal direction. Still other embodiments of portable terminals, such as tablet PCs, may have a substantially square configuration. However, it is also understood that the viewable screens 800, 900 in FIGS. 8-9, respectively, may be configured and customized to have a user-selected layout and orientation in a manner known in the art. Accordingly, the orientations and discussions of the sizes and dimensions of the screens 800, 900 are for illustrative purposes only and are not limiting of the present invention.

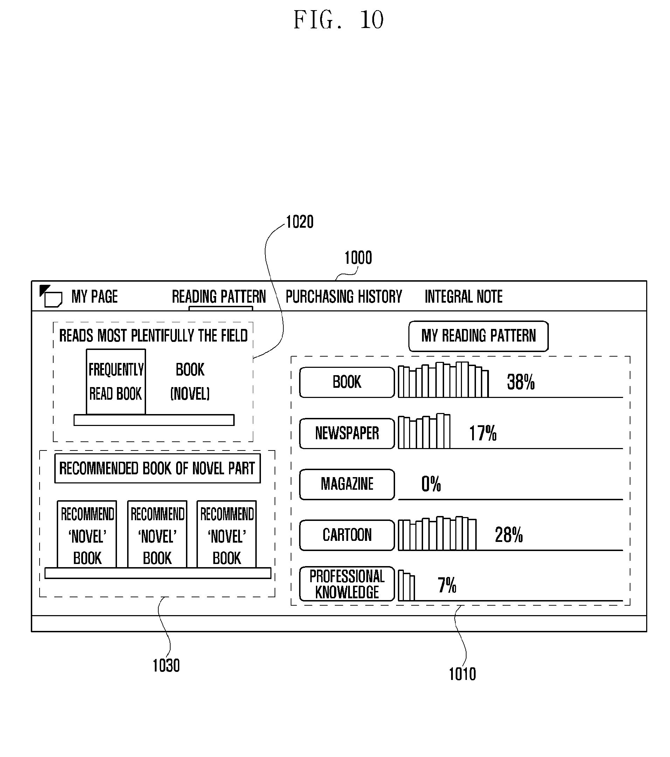

Referring to FIG. 8, the display unit 130 may display a reading execution screen 800, namely, a page of an electronic book under the control of the controller 170. Further, the display unit 130 may display additional information containing current reading situation information and reading schedule information to overlap a reading execution screen 800. If a tap with respect to a centre region on the touch screen 110 of FIG. 1 is sensed, the controller 170 may control the terminal 100 such that the additional information is displayed to overlap the reading execution screen 800. That is, the additional information is not displayed when the user reads a book. However, if there is a separate request from the user, the additional information may be displayed. The additional information may include a scroll bar indicating a read part of entire pages. For example, the scroll bar 810 may include a mark 811 indicating a location of an end page from a reading range which is planned by the user to be read today. A region 812 corresponding to read pages and a region 813 corresponding to non-read pages are distinguished from each other in the scroll bar 810, for example, by having different colours, with the read region 812 being a dark colour, while the unread region 813 being a relatively lighter colour than the read region 812. The scroll bar 810 may further include a mark 814, such as a solid circle, indicating a location of a currently displayed page. The additional information may further contain reading ratio information 820. As shown, the display unit 130 may display an icon 821 for displaying, when tapped or otherwise selected, the reading rate information 820 in an upper end of the screen 800. The icon may have, for example, a clock or stopwatch image which may be functional to indicate to the user the rate or time left in reading a page or a chapter of the electronic book. The reading rate information 820 may include read amount information for the current day, that is, today, as well as total read amount information, and may also include an icon 822 for displaying a reading plan screen 700 as illustrated in FIG. 7. Further, the display unit 130 may display an icon 830 on the screen 800 in FIG. 8 for recommending a book, for example, in a reading list, in an upper end of a screen under the control of the controller 170. If a tap with respect to the book recommendation icon 830 is sensed, the controller 170 may control the terminal 100 such that a book recommendation screen as illustrated in FIG. 10 is displayed.

The description of FIG. 8 is applicable to FIG. 9, which shows identical features corresponding to the scroll bar 810, mark 811, read region 812, unread region 813, mark 814, icon 821, and icon 830 of FIG. 8, so a detailed discussion of such identical features in FIG. 9 is omitted.

FIG. 10 is a diagram illustrating an example of a screen for recommending books which is accessed by tapping a book recommendation icon shown on the screens in FIGS. 8-9, such as the icon 830 in FIG. 8. Referring to FIG. 1 and FIG. 10, the display unit 130 may display a book recommendation screen 1000 under the control of the controller 170. As shown in the example screen in FIG. 10, the book recommendation screen 1000 may contain reading pattern information 1010 for graphically representing the user's personal reading patterns, field information 1020 for graphically representing which fields or categories that the user reads most, and recommendation book information 1030 received from an on-line book store.

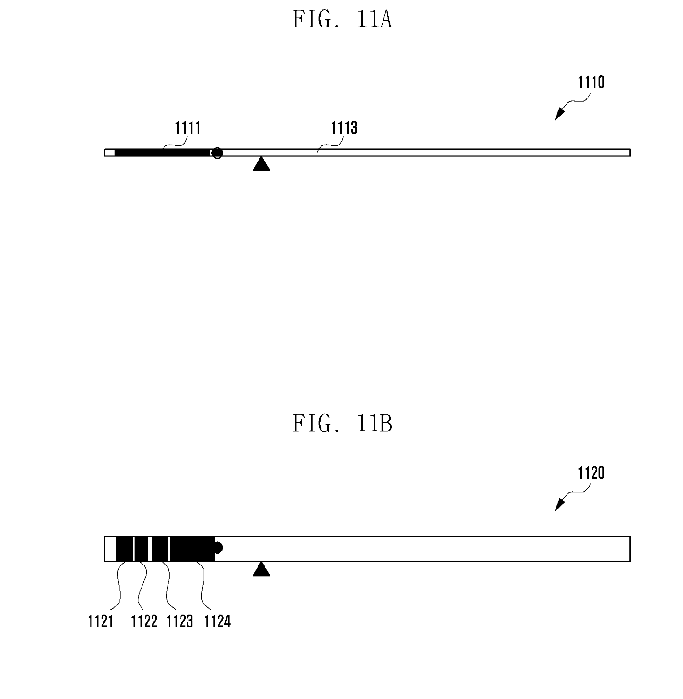

FIGS. 11A-11B are views illustrating a shape of a scroll bar, which may be shown in the screens of FIGS. 8-9, for indicating current reading situation information. Referring to FIG. 11A, the read part 1111 and a non-read part 1113 may be distinguished from each other in the scroll bar 1110, for example, by colour coding of the respective portions of the scroll bar 1110, or alternatively by placement of various marks similar to the marks 811, 814 shown in FIG. 8. Here, the read part 1111 may be displayed as a straight line or bar having a relatively darker colour from the unread part 1113, and providing a visual connection between a first read page and a final page as shown, although there is a non-read part in a middle between the solid circle mark and the triangular mark. In an alternative embodiment, referring to FIG. 11B, the scroll bar 1120 displays only actually read parts 1121, 1122, 1123, and 1124 which may be emphasized and displayed, for example, using colour coding, such as darker colours representing the read parts of an electronic book, while unread parts, including such parts interspersed between read parts, having relatively lighter colours.

A method for providing a user interface in a portable terminal according to an embodiment of the present invention as described above may be implemented in an executable program command form by various computer means and be recorded in a computer readable recording medium. In this case, the computer readable recording medium may include a program command, a data file, and a data structure individually or a combination thereof. In the meantime, the program command recorded in a recording medium may be specially designed or configured for the present invention or be known to a person having ordinary skill in a computer software field to be used. The computer readable recording medium includes Magnetic Media such as a hard disk, a floppy disk, or a magnetic tape, Optical Media such as Compact Disc Read Only Memory (CD-ROM) or Digital Versatile Disc (DVD), Magneto-Optical Media such as floptical disk, and a hardware device such as ROM. RAM, flash memory storing and executing program commands. Further, the program command includes a machine language code created by a complier and a high-level language code executable by a computer using an interpreter. The foregoing hardware device may be configured to be operated as at least one software module to perform an operation of the present invention, and a reverse operation thereof is the same.

In addition, the above-described apparatus and methods according to the present invention can be implemented in hardware, firmware or as software or computer code that can be stored in a recording medium such as a CD ROM, a RAM, a ROM, a floppy disk, DVDs, a hard disk, a magnetic storage media, an optical recording media, or a magneto-optical disk or computer code downloaded over a network originally stored on a remote recording medium, a computer readable recording medium, or a non-transitory machine readable medium and to be stored on a local recording medium, so that the methods described herein can be rendered in such software that is stored on the recording medium using a general purpose computer, a digital computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics or groups described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

As mentioned above, in a method of managing reading and an apparatus thereof according to the invention, the present invention provides elements, steps, and features capable of efficiently managing stored electronic books. Specifically, the present invention provides a method and apparatus that may enhance the reading of the stored electronic books by a user, and allowing the user to monitor and guide a current situation of reading by the user.

Although a method and an apparatus for managing reading according to exemplary embodiments of the present invention have been described in detail hereinabove, it should be clearly understood that many variations and modifications of the basic inventive concepts taught herein which may appear to those skilled in the present art will still fall within the scope of the present invention, as defined in the appended claims.

## Claims

1. A method of managing reading using a terminal, the method comprising:
setting a reading period with respect to an electronic book and at least one reading amount to be achieved by a date occurring before the end of the reading period;
monitoring an achievement proportion of the reading amount while the electronic book is being read; and
displaying reading schedule information including the reading period and the achievement proportion.

2. The method of claim 1, wherein monitoring an achievement proportion of the reading amount comprises:
determining whether a currently displayed page of the electronic book satisfies a pre-set reading recognition condition; and
setting the currently displayed page as a read page when the currently displayed page satisfies the pre-set reading recognition condition.

3. The method of claim 2, wherein determining whether the currently displayed page satisfies the pre-set reading recognition condition comprises detecting a page skip and determining whether the page skip satisfies the reading recognition condition.

4. The method of claim 3, wherein determining whether the page skip satisfies the reading recognition condition comprises determining whether the page skip is one of a plurality of page skips of a plurality of pages.

5. The method of any one of claims 2 to 4, wherein determining whether a currently displayed page of the electronic book satisfies a pre-set reading recognition condition comprises at least one of determining an occurrence of at least one page skip, determining whether separate information is input in the currently displayed page, and determining whether the currently displayed page is displayed for at least a predetermined reading recognition time.

6. The method of any one of claims 2 to 5, wherein monitoring an achievement proportion of the reading amount comprises updating the achievement proportion based on a new amount of read pages when a page set as a read page.

7. The method of claim 6, wherein updating the achievement proportion comprise calculating a ratio of a page set as a read page to the reading amount to be achieved by a date occurring before the end of the reading period.

8. The method of claim 6, wherein updating the achievement proportion comprises calculating a ratio of an amount of pages set as read pages to a total amount of pages of the electronic book.

9. The method of any one of the preceding claim, wherein setting a reading period comprises:
setting a reading start date and a one-day reading amount; and
calculating and displaying a reading termination date based on the reading start date and the one-day reading amount.

10. The method of any one of claims 1 to 8, wherein setting a reading period comprises:
setting a reading start date and a reading termination date; and
calculating and displaying a one-day reading amount based the reading start date and the reading termination date.

11. The method of any one of the preceding claims, wherein setting the reading period comprises:
setting an alarm time or date; and
generating and outputting an alarm at the set alarm time or date during the reading period.

12. The method of any one of the preceding claims, wherein displaying the reading schedule information comprises displaying a total amount of pages of the electronic book, an amount of read pages, a location of the currently displayed page, and a scroll bar indicating a location of a final page in a currently planned reading range.

13. The method of any one of claims 1 to 11, wherein displaying the reading schedule information comprises displaying an amount of read pages and an amount of non-read pages from a reading amount to be achieved by a date occurring before the end of the reading period.

14. An apparatus for managing reading using a terminal, the apparatus comprising:
a memory arranged to store an electronic book;
a controller arranged to set a reading period with respect to the electronic book and at least one reading amount to be achieved by a date occurring before the end of the reading period, and arranged to monitor an achievement proportion of the reading amount while the electronic book is being read; and
a display unit arranged to display a currently displayed page of the electronic book and reading schedule information including the reading period and the achievement proportion.

15. The apparatus of claim 14, further comprising:
a text to speech converter arranged to convert text information of the electronic book into speech data;
an audio processor arranged to convert the speech data from the text to speech converter into an audible sound, and to output the audible sound; and
a reading executor arranged to set a page as the read page in which the outputting of the audible sound is terminated by the audio processor.
